Europäisches Patentamt

European Patent Office

Office européen des brevets

(11) Veröffentlichungsnummer: **0 247 661**
**A2**

(19)

(12) **EUROPÄISCHE PATENTANMELDUNG**

(21) Anmeldenummer: 87200849.5

(22) Anmeldetag: 11.05.87

(51) Int. Cl.⁴: **G 01 M 11/00**

(30) Priorität: **17.05.86 DE 3616798**

(43) Veröffentlichungstag der Anmeldung: **02.12.87 Patentblatt 87/49**

(84) Benannte Vertragsstaaten: **DE FR GB IT**

(71) Anmelder: **Philips Patentverwaltung GmbH, Wendenstrasse 35 Postfach 10 51 49, D-2000 Hamburg 1 (DE)**

(84) Benannte Vertragsstaaten: **DE**

(71) Anmelder: **N.V. Philips' Gloeilampenfabrieken, Groenewoudseweg 1, NL-5621 BA Eindhoven (NL)**

(84) Benannte Vertragsstaaten: **FR GB IT**

(72) Erfinder: **Neumann, Ernst-Georg, Prof. Dr., Zillertaler Strasse 39, D-5600 Wuppertal 12 (DE)**

(74) Vertreter: **Koch, Ingo, Dr.-Ing. et al, Philips Patentverwaltung GmbH Wendenstrasse 35 Postfach 10 51 49, D-2000 Hamburg 1 (DE)**

(54) **Verfahren und Anordnung zur Messung der Dämpfung von Lichtwellenleitern nach dem Rückstreuverfahren.**

(57) Die Erfindung betrifft ein Verfahren zur zeitabhängigen bereichsweisen automatischen Messung der aus einem zu prüfenden Lichtwellenleiter (LWL) zurückgestreuten Anteile von in den LWL gesendeten Lichtimpulsen, welche Anteile von einem optischen Detektor empfangen und in elektrische Messsignale umgewandelt, nachfolgend mit dem Messbereich angepasstem Verstärkungsfaktor verstärkt, danach einer elektronischen Auswerteschaltung zugeführt und schliesslich in einem Speicher abgespeichert werden, aus welchem sie zur Darstellung auf einer Anzeigevorrichtung abrufbar sind. Die Lösung gelingt dadurch, dass im Verlaufe eines automatischen Messvorganges mindestens zwei zeitbenachbarte Zeitbereiche ($\Delta t1$, $\Delta t2$) von Messsignalen (6) mit unterschiedlichen Verstärkungsfaktoren gemessen und in diesen Verstärkungsfaktoren zugeordneten von einander unabhängig abfragbaren Speichern (S1, S2) abgespeichert werden.

BESCHREIBUNG

Verfahren und Anordnung zur Messung der Dämpfung von
Lichtwellenleitern nach dem Rückstreuverfahren

Die Erfindung bezieht sich auf ein Verfahren zur zeitabhängigen bereichsweisen automatischen Messung der aus
einem zu prüfenden Lichtwellenleiter (LWL) zurückgestreuten Anteile von in den LWL gesendeten Lichtimpulsen,
welche Anteile von einem optischen Detektor empfangen und
in elektrische Meßsignale umgewandelt, nachfolgend mit dem
Meßbereich angepaßtem Verstärkungsfaktor verstärkt, danach
einer elektronischen Auswerteschaltung zugeführt und
schließlich in einem Speicher abgespeichert werden, aus
welchem sie zur Darstellung auf einer Anzeigevorrichtung
abrufbar sind.

Ein derartiges Verfahren ist durch IEEE Journal of Quantum
Electronics, Vol. QE-17, Seiten 1264 bis 1269 bekannt.
Dort werden ausgewählte Zeitbereiche der optischen Rückstreusignale mit angepaßtem Verstärkungsfaktor untersucht,
so daß entweder der verfügbare Dynamikbereich eines
Verstärkers voll nutzbar ist oder bei gegebenem
Dynamikbereich eine größere Meßlänge eines LWL untersucht
werden kann. Mittels des bekannten Verfahrens kann jedoch
mit einem automatischen Meßvorgang nur ein Teilbereich der
Länge eines LWL erfaßt werden. Der Dynamikgewinn würde
nicht erhalten, wenn die Gesamtlänge eines langen LWL mit
einem einzigen Meßvorgang gemessen und wenn der
ortsabhängige Verlauf der Dämpfungswerte danach über die
gesamte Länge des LWL in einem einzigen geschlossenen
Kurvenzug dargestellt werden soll.

Der Erfindung liegt die Aufgabe zugrunde, das Verfahren
der eingangs genannten Art derart zu gestalten, daß eine
einheitliche Messung der Dämpfungswerte eines langen LWL und eine geschlossene Darstellung der ermittelten Rückstreukurve mit großer Genauigkeit und ohne zu hohe
Anforderungen an den Dynamikbereich der erforderlichen
elektrischen Bauelemente möglich ist.

Die Lösung gelingt dadurch, daß im Verlaufe eines automatischen Meßvorganges mindestens zwei zeitbenachbarte Zeitbereiche von Meßsignalen mit unterschiedlichen Verstärkungsfaktoren gemessen und in diesen Verstärkungsfaktoren
zugeordneten unabhängig voneinander abfragbaren Speichern
abgespeichert werden.

Als Zeitbereiche sind im vorliegenden Fall solche gemeint,
während welcher zu unterschiedlichen Verzögerungszeiten
von mehr oder weniger entfernten Längenbereichen des LWL
rückgestreute Signale empfangen werden. Diese Zeitbereiche
entsprechen also zuordbaren örtlichen Abschnitten eines zu
prüfenden LWL.

Erfindungsgemäß ergibt sich ein zusätzlicher Aufwand für
zwei oder mehrere vorzugsweise digitale Speichereinrichtungen und auch für zusätzliche Verstärker bzw. für
einen umschaltbaren Verstärker. Da jedoch Verstärker und
auch erforderliche Analog-Digital-Wandler mit erheblich
kleinerer Dynamik verwendbar sind, wird der Gesamtaufwand
dennoch niedriger.

Andererseits kann man natürlich unter Beibehaltung eines
höchstmöglichen Dynamikbereichs die Reichweite des Meßverfahrens durch die Erfindung erheblich vergrößern.

Die unabhängig voneinander abfragbaren Speicher können zu
einer äußerlich einheitlichen Baugruppe zusammengefaßt
sein. Wesentlich ist, daß unterschiedlichen Zeitbereichen
zugeordnete und maßstäblich verschieden eingespeicherte
Datengruppen unabhängig voneinander abfragbar sind.

0247661
PHD 86-063 EP

Die verschiedenen Datengruppen können in einem Fachmann geläufiger Weise elektronisch auf einer Anzeigeeinrichtung, z.B. einem x-y-Plotter oder Video-Monitor, mit einem einheitlichen stetigen Kurvenzug dargestellt werden, so daß die Bedienungsperson hinsichtlich der Meßwertanzeige keinen Unterschied zu anderen bekannten Verfahren feststellen kann.

Eine vorteilhafte Ausführungsart der Erfindung ist dadurch gekennzeichnet, daß bei Verwendung eines einzigen, hinsichtlich des Verstärkungsfaktors umschaltbaren Verstärkers die verschiedenen Zeitbereiche mit von verschiedenen Sende- Lichtimpulsen herrührenden Rückstreusignalen gemessen werden.

Für die zeitlich gesteuerte automatische Umschaltung des Verstärkungsfaktors eines Verstärkers wird eine Stabilisierungszeit benötigt, während welcher der Verstärker auf den neuen stationären Zustand einschwingen kann und während welcher natürlich keine Meßwerte aufgenommen werden können. Damit benachbarte Zeitbereiche dennoch lückenlos erfaßt werden können, werden deshalb die zugehörigen Speicherdaten aufgrund von Rückstreusignalen ermittelt, welche von verschiedenen Sende-Lichtimpulsen herrühren.

Rückstreusignale späterer Zeitbereiche, welche von entfernten Längenbereichen des zu prüfenden LWL rückgestreut werden, haben einen relativ niedrigen Pegel und werden mit entsprechend hohem Verstärkungsfaktor erfaßt. Damit vorher keine zu hohen Signalpegel in den Verstärker gelangen und diesen übersteuern, ist gemäß einer vorteilhaften Weiterbildung der Erfindung vorgesehen, daß zumindest die den zulässigen Pegel überschreitenden Meßsignale während der Messung mit dem höheren Verstärkungsfaktor durch einen optischen Schalter ausgeblendet werden. Dann arbeitet der Verstärker in seinem zugehörigen Zeitbereich mit optimaler Genauigkeit.

0247661

Bei der Messung von Rückstreukurven besteht ein Meßablauf aus einer Vielzahl von Einzelmessungen, aus denen elektronisch Mittelwerte gebildet werden. Dementsprechend ergeben sich merkbare Meßzeiten. Besonders kurze Meßzeiten werden dadurch ermöglicht, daß jedem Speicher ein eigener Verstärker mit unterschiedlichem Verstärkungsfaktor zugeordnet ist, welchen parallel und gleichzeitig das Meßsignal zugeführt wird. Bei dieser Ausführungsform der Erfindung wird zwar für jeden Zeitbereich ein eigener Verstärker benötigt, jedoch können dann die Meßdaten jedes Zeitbereichs während eines gemeinsamen Rückstreusignalzuges ermittelt werden. Im Vergleich zur vorbeschriebenen Lösung ist die Meßzeit bei einer Anzahl von n zu erfassenden Zeitbereichen um den Faktor 1/n kleiner.

Insbesondere bei der letzgenannten Lösung ist es vorteilhaft, daß dem Verstärker mit der höheren Verstärkungsstufe eine Pegelbegrenzung vorgeschaltet wird, um eine Übersteuerung insbesondere der den späteren Zeitbereichen zugeordneten Verstärker zu vermeiden.

Gemäß einer bevorzugten Ausführungsart der Erfindung ist vorgesehen, daß sich die Zeitbereiche der gespeicherten Daten zeitlich überlappen. Dadurch ist einerseits sichergestellt, daß lückenlos Meßdaten über die gesamte zu untersuchende Länge eines LWL vorliegen. Andererseits ergibt sich dadurch die vorteilhafte weiterbildende Lösungsmöglichkeit, daß aus mindestens einem für gleiche Rückstreupunkte innerhalb des Überlappungsbereichs gemessenen Wertepaar der in den Speichern gespeicherten Daten eine Bewertungskonstante über eine Rechenschaltung ermittelt wird, mittels welcher die im zweiten Speicher gespeicherten Daten umgeformt und danach relativ zu den im ersten Speicher gespeicherten Daten maßstabsgleich abrufbar sind.

Wegen unvermeidbarer Toleranzen und wegen schwankender Umweltbedingungen besteht nämlich die Gefahr, daß in verschiedenen Zeitbereichen zugeordneten Speichern für ein und denselben Rückstreuort ermittelte Dämpfungswerte nicht genau übereinstimmen, so daß auf einer Anzeigevorrichtung an der Nahtstelle zweier Bereiche Unstetigkeitsstellen entstehen können, welche beispielsweise einen Fehler im LWL vortäuschen könnten. Durch die automatische rechnerische Anpassung der Rückstreukurven im Überlappungsbereich erhält man stets einen glatten Kurvenzug und in den Nachbarbereichen absolut genau maßstabsgleiche Werte.

Bei einer Speicherung direkter Meßwerte ist es vorteilhaft, daß die Bewertungskonstante als über zahlreiche Wertepaare des Überlappungsbereichs gemittelter Quotient der Wertpaare gewählt wird.

Falls jedoch die Meßsignale in logarithmierter Form gespeichert werden, ist die Bewertungskonstante vorteilhaft eine Differenz der logarithmierten Meßsignale, um welche die Werte eines folgenden Zeitbereichs z.B. bei einer Kurvendarstellung verringert werden müssen.

Eine zur Ausübung des erfindungsgemäßen Verfahrens geeignete Meßanordnung ist dadurch gekennzeichnet, daß sie mindestens zwei voneinander unabhängige digitale Speicherelemente enthält, die mit Ausgängen einer Auswerteelektronik verbunden sind, deren Eingang mit einem optischen Detektor verbunden ist, und daß sie eine Rechenschaltung enthält, die eingangsseitig mit den Speichern und ausgangsseitig mit einer Anzeigevorrichtung verbunden ist. Dabei sind nur die erfindungsspezifischen wesentlichen Bauelemente zusätzlich angegeben, durch welche bekannte Anordnungen ergänzt werden müssen.

Die Erfindung wird anhand der Beschreibung eines in der Zeichnung dargestellten vorteilhaften Ausführungsbeispiels näher erläutert.

Fig. 1 zeigt blockartig eine für die Ausübung der Erfindung geeignete Meßanordnung

Fig. 2 zeigt den zeitlichen Verlauf von in benachbarten Zeitbereichen zugeordneten Speichern gespeicherten Meßdaten.

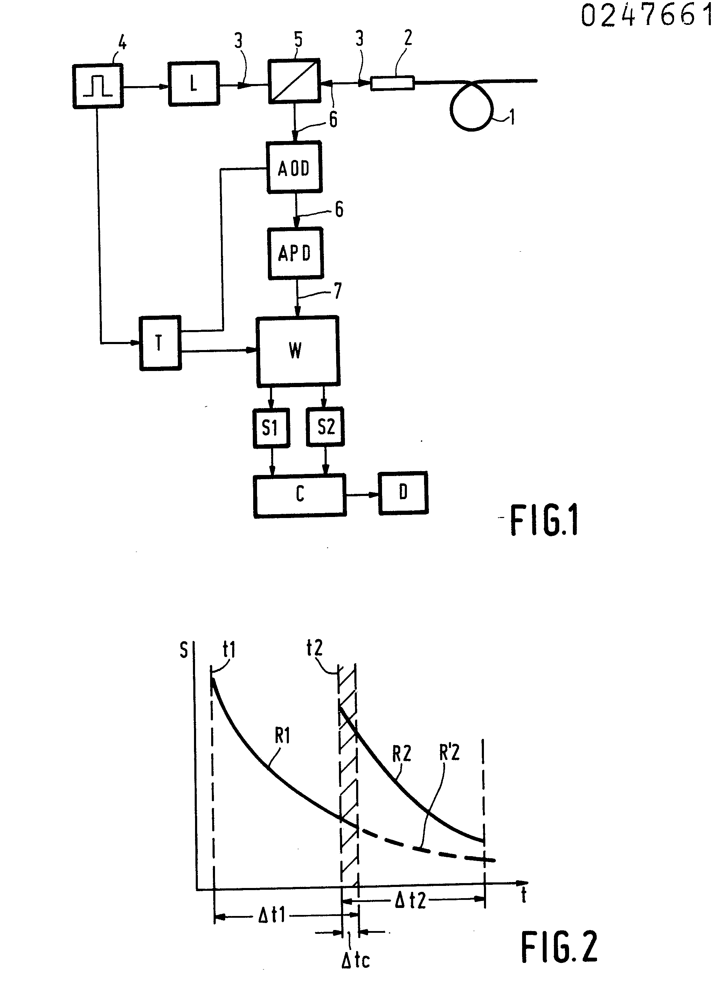

Mit einer Meßanordnung nach Figur 1 soll das Dämpfungsverhalten einer Prüflänge eines LWL 1 gemessen werden, welcher über eine Kupplung 2 an die Meßanordnung angeschlossen ist.

Eine Folge von Sendelichtimpulsen 3 wird durch den vom Impulsgenarator 4 angesteuerten Laser L über den Strahlteiler 5 in den LWL gesendet. Von jedem Sendelichtimpuls 3 werden während einer der Länge der LWL 1 entsprechenden Zeit Rückstreusignale 6 von dem Strahlteiler 5 über den als akustooptischen Deflektor AOD ausgebildeten Schalter auf eine Avalanche-Photodiode APD gelenkt. In gebräuchlicher Weise wird deren elektrisches Ausgangssignal als Meßsignal 7 in einer elektronischen Auswerteschaltung W verstärkt und aufbereitet, insbesondere auch durch Analog-Digital-Wandler in eine Vielzahl von digitalen Meßdaten aufgegliedert, welche verschiedenen Rückstreuorten zugehören und in Speichern S 1 oder S 2 abgespeichert werden. Von dort sind die Daten über die Rechenschaltung C abrufbar und auf einer Anzeigevorrichtung D insbesondere als Kurvenzug darstellbar.

Im Speicher S 1 werden die weniger stark verstärkten Daten derjenigen Meßsignale gespeichert, welche durch Rückstreuung aus dem Anfangsbereich des LWL 1 entstehen. Im Speicher S2 werden mit höherer Verstärkung die Meßsignale gespeichert, welche mit größerer Zeitverzögerung aus dem Endbereich des LWL herrühren. Für eine zeitliche Koordinierung der elektronischen Verfahrensabläufe und für die zeitrichtige Betätigung des optischen Schalters AOD sorgt die Zeitgeberschaltung T.

In Figur 2 sind die analogen Werte s der im Speicher S 1 (Rückstreukurve R 1) und im Speicher S 2 (Rückstreukurve R 2) gespeicherten digitalen Daten über der einem Sendepuls folgenden Rückstreuzeit t dargestellt.

Der Rückstreukurve R 1 liegt ein niedriger Verstärkungsfaktor zugrunde. Die zugehörigen digitalen Daten wurden bei stets durchlässigem (nicht akustisch erregtem) optischen Schalter AOD gemessen und während des ersten Zeitbereichs $\triangle$ t1 im Speicher S 1 abgespeichert. Beim folgenden Sendeimpuls 3 des Lasers L wurde der Verstärkungsfaktor erhöht. Während der Reflektionszeit der aus dem Anfangsbereich des LWL 1 reflektierten Lichts wurde der AOD akustisch erregt, so daß dessen Ausgangsstrahl nicht auf den optischen Detektor APD gelangte. Somit konnte der Verstärker nicht übersteuert werden. Erst ab der Zeit t2 erfolgte eine Messung und Abspeicherung der digitalen Daten im Zeitbereich t2 im Speicher S2.

Durch die Rechenschaltung wird für eine Vielzahl von Zeitpunkten im Überlagerungsbereich $\triangle$ tc der Rückstreukurve R1 und R2 jeweils der Quotient der Werte beider Rückstreuleistungen gebildet. Der Mittelwert dient als Bewertungskonstante, mit welcher z.B. die der Anzeigeneinrichtung D weitergegebenen Daten des Speichers S2 multipliziert werden. Auf der Anzeigeneinrichtung erscheint dann die Rückstreukurve R 2 nahtlos als stufenlose Fortsetzung R'2 der Rückstreukurve R 1.

PATENTANSPRÜCHE

1. Verfahren zur zeitabhängigen bereichsweisen automatischen Messung der aus einem zu prüfenden Lichtwellenleiter (LWL) zurückgestreuten Anteile von in den LWL gesendeten Lichtimpulsen, welche Anteile von einem optischen Detektor empfangen und in elektrische Meßsignale umgewandelt, nachfolgend mit dem Meßbereich angepaßtem Verstärkungsfaktor verstärkt, danach einer elektronischen Auswerteschaltung zugeführt und schließlich in einem Speicher abgespeichert werden, aus welchem sie zur Darstellung auf einer Anzeigevorrichtung abrufbar sind, dadurch gekennzeichnet, daß im Verlaufe eines automatischen Meßvorganges mindestens zwei zeitbenachbarte Zeitbereiche ($\triangle$t1,$\triangle$t2) von Meßsignalen (6) mit unterschiedlichen Verstärkungsfaktoren gemessen und in diesen Verstärkungsfaktoren zugeordneten von einander unabhängig abfragbaren Speichern (S1, S2) abgespeichert werden.

2. Verfahren nach Anspruch 1, dadurch gekennzeichnet, daß bei Verwendung eines einzigen hinsichtlich des Verstärkungsfaktors umschaltbaren Verstärkers die verschiedenen Zeitbereiche ($\triangle$t1,$\triangle$t2) mit von verschiedenen Sendelichtimpulsen (3) herrührenden Rückstreusignalen (6) gemessen werden.

3. Verfahren nach Anspruch 1 oder 2, dadurch gekennzeichnet, daß zumindest die den zulässigen Pegel überschreitenden Eingangssignale während der Messung mit dem höheren Verstärkungsfaktor durch einen optischen Schalter (AOD) ausgeblendet werden.

4. Verfahren nach Anspruch 1,
dadurch gekennzeichnet, daß jedem Speicher (S1, S2) ein eigener Verstärker mit unterschiedlicher Verstärkungsstufe zugeordnet ist, welchen parallel und gleichzeitig Meßsignale (7) zugeführt werden.

5. Verfahren nach einem der Ansprüche 1, 2 oder 4,
dadurch gekennzeichnet, daß dem Verstärker mit der höheren Verstärkungsstufe eine Pegelbegrenzung vorgeschaltet wird.

6. Verfahren nach einem der Ansprüche 1 bis 5,
dadurch gekennzeichnet, daß sich die Zeitbereiche ($\triangle$t1, $\triangle$t2) der gespeicherten Daten zeitlich überlappen ($\triangle$tü).

7. Verfahren nach Anspruch 6,
dadurch gekennzeichnet, daß aus mindestens einem für gleiche Rückstreupunkte innerhalb des Überlappungsbereichs ($\triangle$tc) gemessenen Wertepaar der in den Speichern ( S1, S2) gespeicherten Daten eine Bewertungskonstante über eine Rechenschaltung (C) ermittelt wird, mittels welcher die im zweiten Speicher (S2) gespeicherten Daten umgeformt werden und danach relativ zu den im ersten Speicher (S1) gespeicherten Daten maßstabsgleich abrufbar sind.

8. Verfahren nach Anspruch 7,
dadurch gekennzeichnet, daß die Bewertungskonstante als über zahlreiche Wertepaare des Überlappungsbereichs gemittelter Quotient der Wertepaare ermittelt wird.

9. Verfahren nach Anspruch 7,
<u>dadurch gekennzeichnet</u>, daß die Bewertungskonstante eine
Differenz der logarithmierten Meßsignale (7) ist.

10. Meßanordnung zur Ausübung des Verfahrens nach einem
der Ansprüche 1 bis 9,
<u>dadurch gekennzeichnet</u>, daß sie mindestens zwei
voneinander unabhängige digitale Speicherelemente (S2, S2)
enthält, die mit Ausgängen einer Auswerteelektronik (W)
verbunden sind, deren Eingang mit einem optischen Detektor
(APD) verbunden ist, und daß sie eine Rechenschaltung (C)
enthält, die eingangsseitig mit den Speichern (S1, S2) und
ausgangsseitig mit einer Anzeigevorrichtung (D) verbunden
ist.

FIG.1

FIG.2

PHD 86-063